# EUROPEAN PATENT APPLICATION

(11) **EP 2 145 559 A1**
(43) Date of publication of application: **20.01.2010**
(21) Application number: 09165301.4
(22) Date of filing: 13.07.2009
(51) Int. Cl.: A46B 15/00, A61C 15/04, A46B 17/04

(54) **Versatile toothbrush**

(30) Priority: 14.07.2008 IT MI20081276
(71) Applicant: Ignacchiti, Giovanni, 84073 Sapri (IT)
(72) Inventor: Ignacchiti, Giovanni, 84073 Sapri (IT)
(74) Representative: Modiano, Micaela Nadia

(57) **Abstract**

A toothbrush (1) with integrated dental floss (7), comprising a toothbrush body (2) which ends, at one end, with a head (4) provided with bristles and, at the opposite end, with a pair of arms (5, 6) that fork from the toothbrush body (2), the arms (5, 6) being curved with respect to a plane in which the toothbrush body lies, at least one piece of dental floss (7) being fastened at the body (2) of the toothbrush and at each one of the arms (5, 6).

## Description

The present invention relates to a toothbrush with high versatility operation. More particularly, the invention relates to a toothbrush that allows to combine the usual operation of cleaning one's teeth by means of a brush with a more refined cleaning operation by means of dental floss.

As is known, cleaning one's teeth, preferably after each meal of the day, is an operation that is absolutely necessary in order to prevent the formation of decay.

For this purpose, toothbrushes are generally used which are constituted by a handle portion or grip that ends with a portion provided with bristles that allow to perform a rubbing action on the surface of the teeth.

As an alternative, dental floss is used to clean one's teeth and allows to reach points that are normally not accessible with an ordinary brush.

There are also brushes for cleaning one's teeth which incorporate, at their handle end portion, which ends with a dovetail shape, dental floss that is fixed to the ends of the dovetail and centrally to the body of the brush, so as to form a sort of triangle along which the dental floss lies.

The use of this type of brush, as regards the use of the built-in dental floss, however, suffers drawbacks, since the dental floss must be taut around its anchoring points at the arms of the dovetail and at the central point of the body of the brush, and moreover such floss cannot be turned, due to the type of coupling provided at the arms and at the central body. Substantially, as a consequence of wear of the floss, the user cannot change the portion of floss used to clean the teeth by turning the floss.

In practice, the dental floss is wound in a fixed manner around the end of the brush, with the consequence that once it has worn it is necessary to discard the entire floss and then wind a new portion of floss around the anchoring points.

Moreover, as mentioned previously, tensioning the floss is an operation which is difficult but absolutely necessary, since if there is no tension it is difficult to use the dental floss effectively.

The aim of the present invention is to provide a toothbrush that allows to combine the ordinary use of the brush with dental floss associated with the brush proper, the dental floss allowing to be used along its entire length.

Within this aim, an object of the present invention is to provide a toothbrush in which tensioning of the dental floss can occur in a substantially automatic manner upon engagement of the dental floss with the brush.

Another object of the present invention is to provide a toothbrush in which the coupling of the dental floss to the brush can occur in extremely short times and with an absolutely simple operation.

Still another object of the present invention is to provide a toothbrush that is highly reliable, relatively simple to provide and at competitive costs.

This aim, as well as these and other objects that will become better apparent hereinafter, are achieved by a toothbrush, with integrated dental floss, comprising a brush body that ends, at one end, with a head provided with bristles and, at the opposite end, with a pair of arms that fork from the toothbrush body, characterized in that said arms are curved with respect to a plane in which said toothbrush body lies, at least one piece of dental floss being fastened at the body of said toothbrush and at each one of said arms.

Further characteristics and advantages of the invention will become better apparent from the description of a preferred but not exclusive embodiment of the toothbrush according to the present invention, illustrated by way of non-limiting example in the accompanying drawings, wherein:

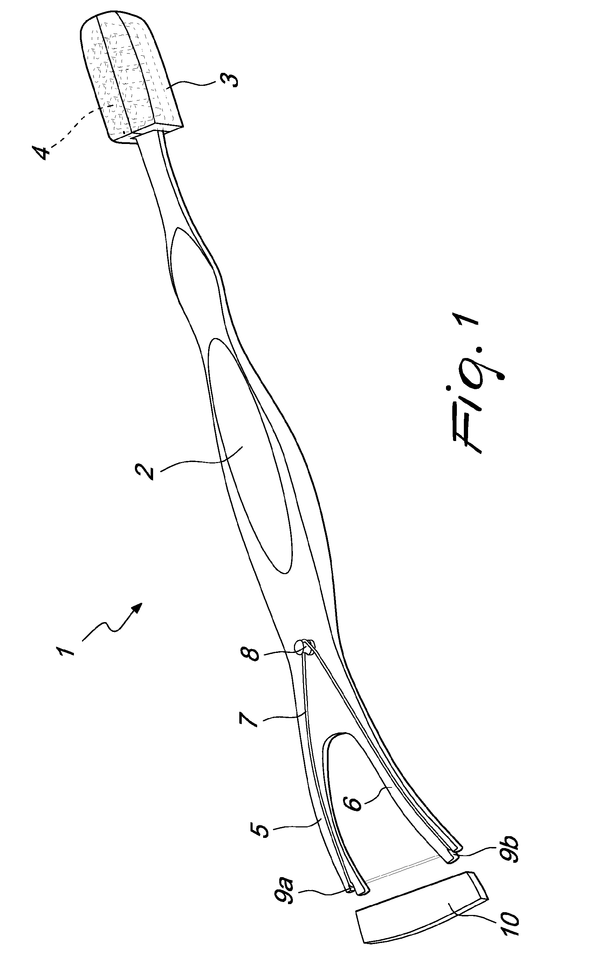

Figure 1 is a perspective view of the toothbrush according to the present invention;

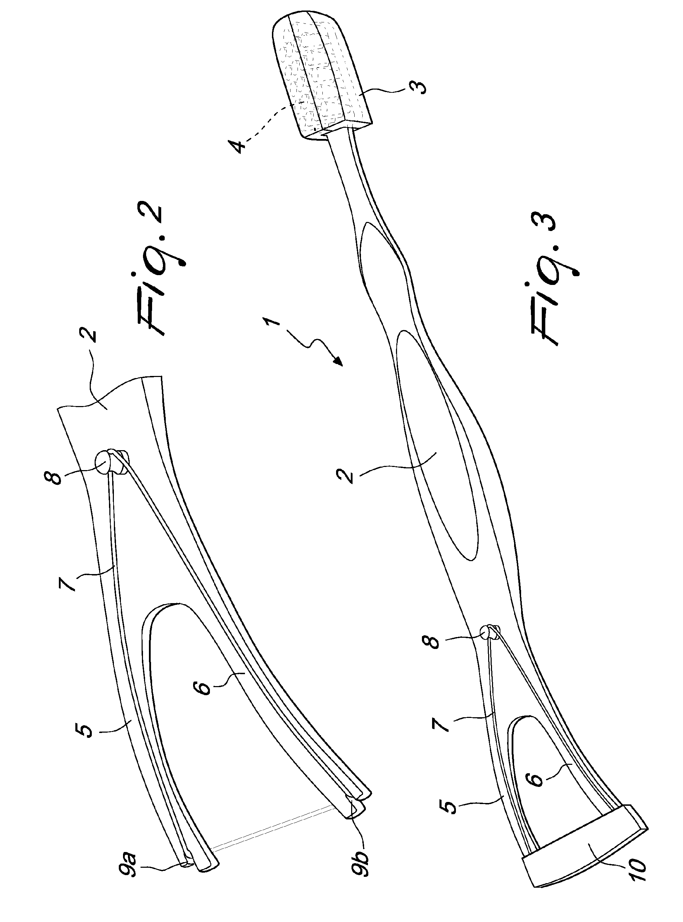

Figure 2 is a detail view of the toothbrush according to the invention;
Figure 3 is a perspective view of the toothbrush according to the invention, with the dental floss covered by a protection element.

With reference to the figures, the toothbrush according to the present invention, generally designated by the reference numeral 1, comprises a toothbrush body 2, which ends at one end with a head 4 provided with bristles for rubbing the surface of the teeth and ends, at the opposite end, with a dovetail shape, i.e., with two arms 5 and 6 which provide a sort of fork. The head 4 may be covered, when not in use, by a protective element 3.

Conveniently, the two arms are curved. Therefore, the arms are curved with respect to the plane on which the toothbrush body lies.

Conveniently, the toothbrush according to the invention provides for the presence of dental floss 7, provided in a closed loop, without the presence of knots, and having a circular transverse cross-section. The dental floss 7 is designed to be engaged with a first engagement point 8 arranged at the central portion of the body 2 of the toothbrush and at two other points 9a and 9b, each provided respectively at one of the arms 5 and 6.

Substantially, the dental floss 7 is thus arranged in a triangular configuration due to the presence of engagement points 8, 9a and 9b.

The engagement points 9a and 9b can, for example, be constituted by grooves provided at the end of the arms 5 and 6, respectively.

The provision of arms 5 and 6, which are curved with respect to the plane in which the toothbrush body 2 lies, allows to tension the dental floss 7 which is provided with such a length as to utilize the flexibility of the arms 5 and 6 and their natural curvature in order to have a tension of the floss that is determined inherently by its length.

Therefore, a slight curving of the arms 5 and 6 allows to engage the dental floss 7 at the three engagement points 8, 9a and 9b, and the subsequent release of the arms 5 and 6 allows them to return to their unstressed configuration, while maintaining their initial curvature, and therefore tension the dental floss 7.

The lack of knots at the dental floss, which is thus provided without discontinuity, allows to make the dental floss slide around the three engagement points 8, 9a and 9b, so as to offer to the user, in each instance, a portion of dental floss that is not worn in order to proceed with the tooth cleaning operation.

Therefore, the brush according to the present invention, differently from known types of solutions, allows the user to use the dental floss over its entire length, therefore utilizing it more, since there are no portions of the floss that cannot be used for interdental cleaning.

Moreover, the floss, thanks to the shape of the toothbrush body, can be tensioned better around its engagement points, with a better yield as regards the obtainable cleaning effect.

Moreover, a covering element 10 is provided which is adapted to be arranged at the arms so as to provide protection, also in terms of hygiene, of the ends of the arms 5, 6 and of the portion of dental floss 7 that is tensioned between the ends of the arms.

In practice it has been found that the toothbrush according to the present invention fully achieves the intended aim and objects since, as mentioned, it allows to integrate in a toothbrush that is commonly used dental floss with improved cleaning effectiveness with respect to dental flosses integrated in known types of toothbrushes.

The toothbrush thus conceived is susceptible of numerous modifications and variations, all of which are within the scope of the appended claims; moreover, all the details may be replaced with other technically equivalent elements. For example, the person skilled in the art easily understands that the toothbrush might be provided with means for blocking the unintentional sliding of the floss during use, where the arrangement of the dental floss allows in any case, if necessary, for example in passing the floss between particularly narrow dental gaps, to block the unintentional sliding of the floss by using one finger of the hand that holds the toothbrush.

Still further, the head 4 can be of the replaceable type, so that it can be easily replaced when the bristles are worn out.

In practice, the materials used, as well as the contingent shapes and dimensions, may be any according to requirements and to the state of the art.

Therefore, the scope of the protection of the claims must not be limited by the illustrations or by the preferred embodiments shown in the description by way of example, but rather the claims must comprise all the characteristics of patentable novelty that can be deduced from the present invention, including all the characteristics that would be treated as equivalent by the person skilled in the art.

The disclosures in Italian Patent Application no. MI2008A001276, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A toothbrush (1) with integrated dental floss (7), comprising a toothbrush body (2) which ends, at one end, with a head (4) provided with bristles and, at the opposite end, with a pair of arms (5, 6) that fork from the toothbrush body (2), **characterized in that** said arms (5, 6) are curved with respect to a plane in which said toothbrush body (2) lies, at least one piece of dental floss (7) being fastened at the body of said toothbrush and at each of said arms (5, 6).

2. The toothbrush (1) according to claim 1, **characterized in that** it comprises engagement points (9a, 9b) at the arms (5, 6) of said body (2) of said toothbrush, which are formed by grooves provided at the ends of each of said arms (5, 6).

3. The toothbrush (1) according to one or more of the preceding claims, **characterized in that** said dental floss (7) is provided without discontinuities.

4. The toothbrush (1) according to one or more of the preceding claims, **characterized in that** said dental floss (7) has a circular transverse cross-section.

5. The toothbrush (1) according to one or more of the preceding claims, **characterized in that** it comprises a covering element (10) that is adapted to be arranged at said arms (5, 6) to protect the ends of said arms (5, 6).

6. Dental floss (7) adapted to be used with a toothbrush (1) according to one or more of claims 1 to 5, **characterized in that** it is provided without discontinuities.

7. The dental floss (7) according to claim 6, **characterized in that** it has a circular transverse cross-section.
